(19) Europäisches Patentamt
European Patent Office
Office européen des brevets

(11) EP 4 618 432 A1

(12) **EUROPEAN PATENT APPLICATION**

(43) Date of publication:
**17.09.2025 Bulletin 2025/38**

(21) Application number: **25156897.8**

(22) Date of filing: **10.02.2025**

(51) International Patent Classification (IPC):
***H04B 5/22*** *(2024.01)* ***H04B 1/40*** *(2015.01)*
***H04B 5/40*** *(2024.01)* ***H04B 5/48*** *(2024.01)*

(52) Cooperative Patent Classification (CPC):
**H04B 5/22; H04B 1/16; H04B 5/40; H04B 5/48**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2024 JP 2024040550**

(71) Applicant: **CANON KABUSHIKI KAISHA**
**Tokyo 146-8501 (JP)**

(72) Inventors:
- **TOKANO, Katsuki**
  **Tokyo, 146-8501 (JP)**
- **SHOJI, Yuki**
  **Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **WIRELESS COMMUNICATION APPARATUS AND WIRELESS SYSTEM**

(57) A receiving device receives a signal through electromagnetic field coupling with another communication apparatus, and the receiving device includes a coupled conductor including two electrodes, a circuit element section that is disposed between the two electrodes and includes a high-pass filter and a resistor, and a receiving circuit, wherein a cut-off frequency of the high-pass filter is lower than a self-resonance frequency of the coupled conductor.

**FIG.1A**

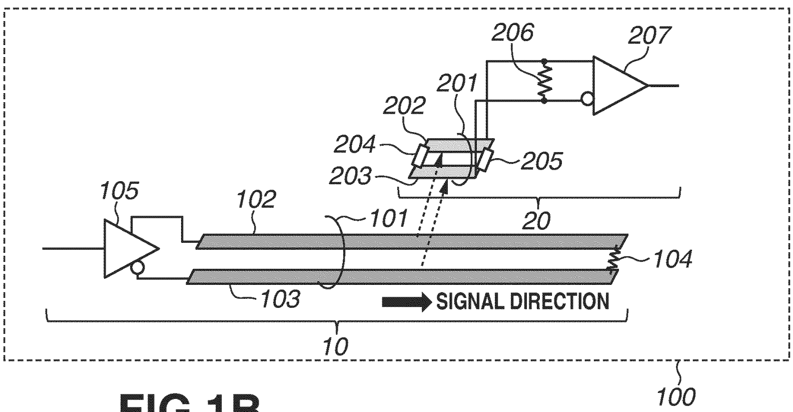


**FIG.1B**

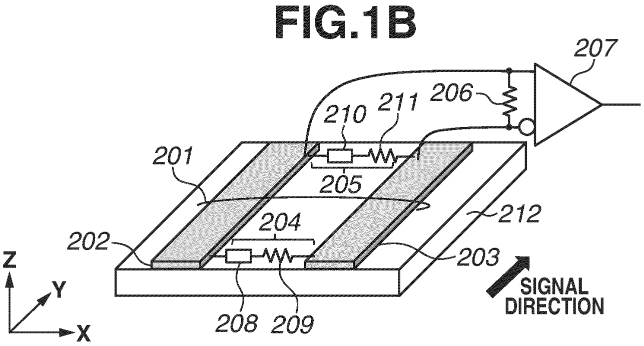


**FIG.1C**

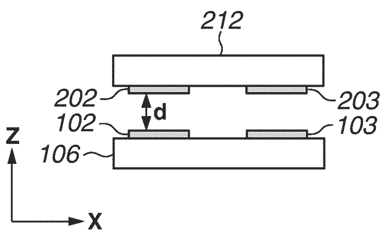


EP 4 618 432 A1

## Description

### BACKGROUND OF THE INVENTION

#### Field of the Invention

The present invention relates to a wireless communication apparatus which wirelessly transmits a signal, and a wireless communication system.

#### Description of the Related Art

In recent years, a near field communication system that performs communication between a plurality of proximate electrodes through electromagnetic field coupling has been studied and developed. Replacing wired connection using a connector and a harness for communication with an electric circuit substrate or between modules, with wireless connection leads to a reduction in the number of parts in a connection section and a simplification of a manufacturing process of an apparatus. Japanese Patent Application Laid-Open No. 2021-168491 discusses a wireless communication apparatus including a transmitter and a receiver that are applied to a rotary section. The wireless communication apparatus performs wireless communication through electromagnetic field coupling between electrodes.

In the wireless communication apparatus discussed in Japanese Patent Application Laid-Open No. 2021-168491, a receiver resistor with sufficiently high resistance is disposed between electrodes in the receiver, whereby a passband that does not attenuate the lowest frequency component of data is obtained. However, in a configuration discussed in Japanese Patent Application Laid-Open No. 2021-168491, self-resonance occurs due to a parasitic capacitance component and a parasitic inductance component of each electrode at a high frequency. For example, in a case where high-speed wireless communication is performed using a frequency component near a frequency at which self-resonance is generated, data degrades due to the influence of self-resonance.

### SUMMARY OF THE INVENTION

The present invention is directed to providing a wireless communication apparatus that prevents self-resonance due to a parasitic component of an electrode and that is capable of performing high-speed data transmission.

According to a first aspect of the present invention, there is provided a wireless communication apparatus as specified in claims 1 to 10. According to a second aspect of the present invention, there is provided a wireless communication system as specified in claims 11 and 12.

Further features of the present invention will become apparent from the following description of embodiments with reference to the attached drawings.

### BRIEF DESCRIPTION OF THE DRAWINGS

Figs. 1A to 1C are diagrams each illustrating a configuration example of a wireless communication system according to a first embodiment.

Figs. 2A to 2C are graphs each indicating a result of simulation of the wireless communication system according to the first embodiment.

Figs. 3A to 3C are graphs each indicating a result of simulation regarding impedance of a coupled system that is connected to a receiving device according to the first embodiment.

Fig. 4A is a diagram illustrating a configuration example of the receiving device according to the first embodiment. Fig. 4B is a graph indicating a result of simulation with the receiving device.

Figs. 5A and 5B are diagrams each illustrating another configuration example of the receiving device according to the first embodiment. Fig. 5C is a graph indicating a result of simulation with the receiving device.

Figs. 6A and 6B are diagrams each illustrating an example regarding a receiving device and a filter configuration of a circuit element section according to a second embodiment. Fig. 6C is a graph indicating a result of simulation with the receiving device and the filter configuration of the circuit element section.

Fig. 7A is a diagram illustrating a configuration example of a receiving device according to a third embodiment. Figs. 7B and 7C are graphs each indicating a result of simulation with a correction circuit and a wireless communication apparatus.

Figs. 8A to 8C are views each illustrating a configuration example of coupled conductors.

### DESCRIPTION OF THE EMBODIMENTS

Each of the embodiments of the present invention described below can be implemented solely or as a combination of a plurality of the embodiments or features thereof where necessary or where the combination of elements or features from individual embodiments in a single embodiment is beneficial. A first embodiment of the present invention will be described below with reference to drawings. Fig. 1A is a diagram illustrating a configuration example of a wireless communication system 100 according to the present embodiment. The wireless communication system 100 includes a transmitting device 10 and a receiving device 20, and performs wireless communication. The transmitting device 10 includes a coupled conductor 101, a termination resistor 104, and a transmitting circuit 105. The receiving device 20 includes a coupled conductor 201, circuit element sections 204 and 205, a resistor 206, and a receiving circuit 207.

The coupled conductor 101 includes electrodes 102 and 103, and the coupled conductor 201 includes electrodes 202 and 203.

A configuration of the transmitting device 10 is described. The transmitting circuit 105 in the transmitting device 10 inputs a transmission signal to the coupled conductor 101. The transmission signal input to the coupled conductor 101 may be a signal modulated due to a carrier wave, or a baseband signal without modulation. In the present invention, transmission of the baseband signal without modulation is described. The transmission signal that is transmitted from the transmitting circuit 105 is a differential signal. The transmission signal may be a binary digital signal encoded by a code, such as 8B/10B, or a multi-level signal such as, a ternary or higher level signal. One end of each of the two electrodes, the electrodes 102 and 103, is connected to an output section of the transmitting circuit 105, and the other end of each of the two electrodes is terminated by a resistor having impedance that is substantially equal to the differential impedance of the coupled conductor 101. Thus, the signal is transmitted in a direction from the transmitting circuit 105 to the termination resistor 104.

The coupled conductor 101 may be formed on a substrate or formed of a plate or the like. The coupled conductor 101 may have a ground (GND) conductor at a reference potential for a signal to be applied to the electrodes 102 and 103.

A configuration of the receiving device 20 is described. Fig. 1B is a view illustrating details of the receiving device 20 in the wireless communication system 100 when viewed from a surface via which the receiving device 20 is coupled to the coupled conductor 101. The coupled conductor 201 is formed on a dielectric substrate 212. The circuit element section 204 includes a circuit on which a filter 208 and a resistor 209 are connected to each other in series, and the circuit element section 205 includes a circuit on which a filter 210 and a resistor 211 are connected to each other in series. The coupled conductor 201 is connected to the receiving circuit 207 via a signal line from one end that is in proximity to one end of the coupled conductor 101, to which the termination resistor 104 is connected.

The coupled conductor 201 includes the electrodes 202 and 203. The coupled conductor 101 in the transmitting device 10 and the coupled conductor 201 in the receiving device 20 are set in proximity to each other so as to face each other, and serve as couplers that are coupled through an electromagnetic field. Fig. 1C is a cross-sectional view illustrating a state where the coupled conductor 101 in the transmitting device 10 and the coupled conductor 201 in the receiving device 20 face each other in the wireless communication system 100. As illustrated in Fig. 1C, the electrodes 102 and 202 are set to face each other, and the electrodes 103 and 203 are set to face each other. The coupled conductor 101 is formed on a dielectric substrate 106. A distance d is the distance between the coupled conductors 101 and 201 in a Z-axis direction.

In response to a differential signal output from the transmitting circuit 105, differential signals at mutually opposite phases are input to the electrodes 102 and 103, and differential signals at mutually opposite phases are output to the electrodes 202 and 203. An output differential signal is input to the receiving circuit 207.

The filters 208 and 210 in Fig. 1B have high-pass filter characteristics. A high-pass filter has characteristics that impedance is extremely high at a frequency that is lower than a cut-off frequency of the high-pass filter and impedance is extremely low at a frequency that is higher than the cut-off frequency. That is, the high-pass filter permits the passage of signals with frequencies higher than the cut-off frequency.

Thus, the circuit element sections 204 and 205 have extremely high impedance at a frequency that is lower than the cut-off frequency, and have impedance of the resistors 209 and 211 at a frequency that is higher than the cut-off frequency. The impedance of the resistors 209 and 211 is set at impedance of a coupled system, which will be described below. With this configuration, the impedance of the coupled conductor 201 is matched to that of the resistors 209 and 211 at a frequency that is higher than the cut-off frequency, and the influence of self-resonance due to a parasitic component of the coupled conductor 201 is suppressed.

Since the impedance is matched to the impedance of the resistors 209 and 211, the occurrence of standing waves is suppressed, which allows a length of each of the electrodes 202 and 203 in a Y-axis direction to be set at a certain value.

The resistor 206 in the receiving device 20 is connected to a transmission path between the coupled conductor 201 and the receiving circuit 207. The resistor 206 is set at high impedance of 1 kΩ or more. By setting an impedance value of the resistor 206 to high, the impedance of the resistor 206 is set to be higher than impedance of a capacity component generated by coupling of the coupled conductors 101 and 201 not only in a high frequency range, but also in a low frequency range. With this configuration, a transmission signal at a low frequency is also transmitted to the receiving circuit 207. Accordingly, in a case where a signal transmitted from the coupled conductor 101 is a rectangular wave signal, a signal input from the coupled conductor 201 to the receiving circuit 207 has a substantially rectangular wave shape. In a case where input impedance of the receiving circuit 207 is sufficiently higher than the impedance of the capacity component generated by coupling and the impedance of the resistors 209 and 211 at the lowest frequency of a transmission signal, the resistor 206 may be omitted.

The receiving circuit 207 shapes or amplifies a signal transmitted from the coupled conductor 201 and outputs the resultant signal to a circuit in a subsequent stage. Examples of a configuration for shaping the signal include an emitter-follower circuit and a differential amplification circuit. In a case where a signal transmitted from the coupled conductor 201 is able to be processed as it is as a received signal, a shaping function may be omitted.

Figs. 2A illustrates transmission characteristics of the coupled conductors 101 and 201 in the configuration of the wireless communication system 100 illustrated in Figs. 1A to 1C. Figs. 2B and 2C each illustrate a simulation result regarding an eye pattern of a signal input to the receiving circuit 207. Illustrated are a simulation result in a case where the circuit element sections 204 and 205 are disposed and a simulation result in a case where the circuit element sections 204 and 205 are not disposed. These simulation results are obtained with the distance d between the coupled conductors 101 and 201 set at 2 millimeters (mm).

A resistance value of the resistor 206 in Figs. 1A and 1B is set at 22 kiloohms (kΩ) in simulation. As long as the resistance value is set to be higher than impedance of the capacity component due to coupling of the coupled conductors 101 and 201 at a lowest frequency f1 of the transmission signal, the resistance value may be lower than 22 kΩ. Capacitors are disposed as the filters (high-pass filters) 208 and 210 in the circuit element sections 204 and 205, respectively. A value of each capacitor is set at 0.4 picofarads (pF) in the simulation. A cut-off frequency fc of each of the high-pass filters 208 and 210 is set at a value that satisfies the following Expression (1) when the self-resonance frequency due to the parasitic component of the coupled conductor 201 is fp.

$$f_1 \leq f_c \leq f_p \quad (1)$$

That is, the cut-off frequency of each of the high-pass filter 208 and 210 is settable to any value as long as the cut-off frequency is in the range from the lowest frequency of the transmission signal or higher to the self-resonance frequency or less. As the lowest frequency of the transmission signal in the present invention, for example, the number of consecutive bits is a maximum of 5 bits, for example, in a case where a baseband signal at 10 Gbps is encoded using 8b/10b and transmitted from the coupled conductor 101 via the electrode 102. Since the fundamental frequency is 5 gigahertz (GHz), the lowest frequency is set at 1 GHz, which is one-fifth of 5 GHz. The lowest frequency varies depending on the speed of a signal to be transmitted, an encoding method, a value of an error rate that is set in the system, or the like.

Fig. 2A illustrates a simulation result indicating transmission characteristics in transmission of a differential signal from the coupled conductor 101 to the coupled conductor 201. The abscissa indicates a frequency, and the ordinate indicates a transmission amount. A broken line 220 indicates transmission characteristics in a case where the circuit element sections 204 and 205 are not disposed. A solid line 221 indicates transmission characteristics in a case where the circuit element sections 204 and 205 are disposed. The broken line 220 shows peaking around 7 GHz. This is because self-resonance due to occurrence of the parasitic component of the coupled conductor 201. This result shows that the self-resonance frequency of the coupled conductor 201 is approximately 7 GHz. In contrast, the solid line 221 shows that peaking is suppressed. This is because the circuit element sections 204 and 205 function as the resistors 209 and 211, respectively, and the impedance is matched to that of the resistors 209 and 211 in a high frequency range. Fig. 2B illustrates an eye pattern of signals input to the receiving circuit 207 at the time of transmission of serial signals at 10 gigabits per second (Gbps) in a case where the circuit element sections 204 and 205 are not disposed. Fig. 2C illustrates an eye pattern at the time of transmission of serial signals at 10 Gbps in a case where the circuit element sections 204 and 205 are disposed. Eye opening portions are observable in Fig. 2C, which means that waveform distortion is improved.

Impedance of a coupled system, which is a value of the resistors 209 and 211, is described with reference to Figs. 3A to 3C. The impedance of the coupled system mentioned herein is matched impedance of the coupled conductor 201 on the receiving side in a state where the coupled conductor 101 on the transmitting side and the coupled conductor 201 on the receiving side face each other. Fig. 3A illustrates reflection characteristics in a case where the impedance of the resistors 209 and 211 is changed at each distance d between the coupled conductor 101 and the coupled conductor 201. Impedance at the lowest point in each graph is the impedance of the coupled system. That is, impedance of the coupled system (Zoc1) is approximately 160 Ω when the distance d is 1 mm, impedance of the coupled system (Zoc2) is approximately 200 Ω when the distance d is 2 mm, impedance of the coupled system (Zoc3) is approximately 220 Ω when the distance d is 3 mm, and impedance of the coupled system (Zoc4) is approximately 220 Ω when the distance d is 4 mm. Fig. 3A also illustrates reflection characteristics of the coupled conductor 201 in isolation when the coupled conductor 201 and the coupled conductor 101 do not face each other. Fig. 3A shows that characteristic impedance (Zo) of the coupled conductor 201 in isolation is approximately 220 Ω, which is substantially equal to Zoc3 and Zoc4. Fig. 3B is a graph indicating a relationship between the distance d and the impedance of the coupled system. It is observed that with a decrease in the distance d, a difference between the characteristic impedance and the impedance of the coupled system increases. This is because the strength of coupling between the coupled conductor 201 and the coupled conductor 101 increases.

Fig. 3C illustrates a simulation result indicating transmission characteristics in transmission of the differential signal from the coupled conductor 101 to the coupled conductor 201 in response to a change in the impedance of the resistors 209 and 211. The distance d between the coupled conductor 201 and the coupled conductor 101 is 2 mm, which is similar to a simulation condition illustrated in Figs. 2A. The broken line 220 and the solid line 221 are similar to those in the graphs in Figs. 2A. Transmission characteristics indicated by a solid light gray line 222 are transmission characteristics in a case where the impedance of the resistors 209 and 211 is half the impedance of the coupled system, and transmission characteristics indicated by a solid gray line 223 are transmission characteristics in a case where the impedance of the resistors 209 and 211 is two times the impedance of the coupled system. Fig. 3C shows that peaking is suppressed even in a case where the impedance of the resistors 209 and 211 is slightly deviated from the impedance of the coupled system in comparison with the case where the circuit element sections 204 and 205 are not disposed. That is, even in a case where the impedance of the resistors 209 and 211 is set in a range from a value that is more than or equal to half the impedance of the coupled system to a value that is less than or equal to two times the impedance of the coupled system, an effect of suppressing peaking is observed.

Each of the filters 208 and 210 illustrated in Fig. 1B is desirably a filter whose cut-off frequency includes a fundamental frequency component of a passing signal. Specifically, in a case where a baseband signal at 10 Gbps is transmitted from the coupled conductor 101 via the electrode 102, a frequency component of 5 GHz is the fundamental frequency component. Thus, as the high-pass filters 208 and 210, filters having characteristics including at least a frequency component of 5 GHz in the passband are disposed.

In the present embodiment, the coupled conductor 201 is connected to the receiving circuit 207 via a signal line from one end that is in proximity to one end of the coupled conductor 101, to which the termination resistor 104 is connected. Even in a case where the coupled conductor 201 is connected to the receiving circuit 207 via a signal line from the other end that is in proximity to the other end of the coupled conductor 101, to which the transmitting circuit 105 is connected, a similar effect of suppressing peaking is obtainable. Fig. 4A illustrates a configuration in which the coupled conductor 201 is connected to the receiving circuit 207 via the signal line from the other end that is in proximity to the other end of the coupled conductor 101, to which the transmitting circuit 105 is connected. Fig. 4B illustrates a simulation result regarding transmission characteristics in the configuration illustrated in Fig. 4A. The broken line 220 and the solid line 221 are similar to those in the graph in Fig. 2A, and transmission characteristics indicated by a solid light gray line 224 are transmission characteristics in the configuration illustrated in Fig. 4A. It is observed from the line 224 that peaking is suppressed in comparison with a case of the broken line 220.

While the description has been given of the configuration in which the circuit element sections 204 and 205 are disposed at respective ends of the coupled conductor 201 in the present embodiment, a circuit element section may be disposed at one of the two ends.

Figs. 5A and 5B are configuration diagrams in a case where a circuit element section is disposed at one of the two ends.

Fig. 5C illustrates a simulation result regarding transmission characteristics in the configuration illustrated in Figs. 5A and 5B. The broken line 220 and the solid line 221 are similar to those in the graph in Fig. 2A, transmission characteristics indicated by a solid light gray line 225 are transmission characteristics in the configuration illustrated in Fig. 5A, and transmission characteristics indicated by a solid gray line 226 are transmission characteristics in the configuration illustrated in Fig. 5B. It is observed from the lines 225 and 226 that peaking is suppressed in comparison with a case of the broken line 220.

In the first embodiment, the description has been given of the configuration including the circuit element sections 204 and 205, each of which includes a series circuit including a filter and a resistor. In a second embodiment, another high-pass filter configuration will be described.

Figs. 6A and 6B each illustrate a high-pass filter circuit configuration including the receiving device 20 and the circuit element sections 204 and 205 in the present embodiment. The transmitting device 10 and the method of transmitting a signal are similar to those in the first embodiment. As for the receiving device 20, a component that is similar to that in the first embodiment is denoted by an identical reference sign, and the redundant description is omitted.

In Fig. 6A, the circuit element sections 204 and 205 each include two high-pass filters. Fig. 6B illustrates a circuit configuration example regarding high-pass filters 208, 210, 213, and 214. Each of the high-pass filters 208, 210, 213, and 214 includes capacitors 215 and 216, an inductor 217, and a resistor 218. While this is a configuration of a second order Chebyshev filter, a filter order and a filter type are not specifically limited as long as each of the high-pass filters 208, 210, 213, and 214 has a high-pass filter function. The filter type may be, for example, a Bessel filter, a Gaussian filter, or a Butterworth filter. Each of the high-pass filters 208, 210, 213, and 214 may include other elements in addition to the passive components. In Figs. 6A and 6B, the resistor 218 in the high-pass filter 210 is connected to the resistor 218 in the high-pass filter 214. This is because, in order for the inductor 217 to function, a portion at an intermediate potential is required. In a case where a signal at a low frequency is transmitted, the impedance of the inductor 217 is low and a short circuit occurs, which unbalances impedance in the circuit element sections 204 and 205. To eliminate the unbalance, the resistor 218 is disposed.

Fig. 6C illustrates a simulation result indicating transmission characteristics in transmission of a differential signal from the coupled conductor 101 to the coupled conductor 201 in the configuration illustrated in Figs. 6A and 6B. In the simulation, capacitance of each of the capacitors 215 and 216 is set at 0.43 pF, inductance of the inductor 217 is set at 4.6 nH, and resistance of the resistor 218 is set at 50 Ω. The abscissa indicates a frequency, and the ordinate indicates a transmission amount.

Transmission characteristics indicated by a solid line 227 are transmission characteristics in a case where the high-pass filters 208, 210, 213, and 214 illustrated in Fig. 6B are mounted. The broken line 220 and the solid line 221 are similar to those in the graph in Fig. 2A. It is observed that peaking that has occurred around 7 GHz on the broken line 220 is suppressed also in the present embodiment. When comparing the line 227 and the line 221, it is observed that a transmission amount is larger in the case of the transmission characteristics indicated by the line 227. In this manner, with use of the configuration of the second order Chebyshev filter, the transmission amount is able to be increased.

In a third embodiment, a description will be given of a configuration in a case where a correction circuit is further connected in a subsequent stage of the receiving circuit 207. Fig. 7A is a configuration diagram in a case where a correction circuit 219 is connected in the subsequent stage of the receiving circuit 207. The transmitting device 10 and the method of transmitting a signal are similar to those in the first embodiment. As for the receiving device 20, a component that is similar to that in the first embodiment is denoted by an identical reference sign, and the redundant description is omitted.

In Fig. 7A, the correction circuit 219 is connected to the output section of the receiving circuit 207 that is used in the second embodiment. Fig. 7B illustrates frequency characteristics of the correction circuit 219. The abscissa indicates a frequency, and the ordinate indicates a transmission amount. The correction circuit 219 has a characteristic where a transmission amount increases with frequency characteristics in a lower frequency range. Fig. 7C illustrates a simulation result indicating transmission characteristics in transmission of a differential signal from the coupled conductor 101 to the coupled conductor 201. The abscissa indicates a frequency, and the ordinate indicates a transmission amount. Transmission characteristics indicated by a solid line 228 are transmission characteristics in a case where the correction circuit 219 is connected. It is observed that a difference between a peak value of frequency characteristics in a low frequency range and a peak value of frequency characteristics is suppressed in comparison with the frequency characteristics indicated by the line 221. This is because a frequency component in a low frequency range is emphasized by the correction circuit 219 having frequency characteristics illustrated in Fig. 7B with respect to the frequency characteristics indicated by the line 221.

The correction circuit 219 may be changed in order with the receiving circuit 207, or may be built into the receiving circuit 207. Furthermore, the frequency characteristics of the correction circuit 219 are not limited to characteristics in the present embodiment, and may be selected according to use application. For example, the frequency characteristics may be of attenuating frequency characteristics in a high frequency range, of emphasizing frequency characteristics at around a certain frequency, or others.

A method of coupling the coupled conductors 101 and 201 in the first to third embodiments may be implemented by electric field coupling, magnetic field coupling, or both electric field coupling and magnetic field coupling. As long as the electrodes 102 and 202 face each other, the electrodes 103 and 203 may face each other, and the transmitting device 10 may be moved or the receiving device 20 may be moved.

In the first to third embodiments, the description has been given of the configuration in which the shape of each of the coupled conductors 101 and 201 is a rectangular parallelepiped.

The shape of each of the coupled conductors 101 and 201 is not limited to the rectangular parallelepiped, and may be a shape other than the rectangular parallelepiped as long as the electrodes 102 and 202 face each other and the electrodes 103 and 203 face each other. For example, each of the coupled conductors 101 and 201 may have a shape having curved corners as illustrated in Fig. 8A, an ellipse shape as illustrated in Fig. 8B, or a polygon shape as illustrated in Fig. 8C. In a case where a width of each of the coupled conductors 101 and 201 in an X-axis direction is not uniform, locations in which the circuit element sections 204 and 205 are disposed are determined, and thereafter best-matched impedance is set as impedance of the coupled system.

The disclosure of the present embodiment includes the following configurations.

(Configuration 1)

A wireless communication apparatus comprising:

a receiving device configured to receive a differential signal through electromagnetic field coupling with another communication apparatus,
wherein the receiving device includes:

a coupled conductor including two electrodes configured to receive the differential signal through the electromagnetic field coupling;
a circuit element section that is disposed between the two electrodes and includes at least one high-pass filter and a resistor; and
a receiving circuit that is connected to the coupled conductor, and

wherein a cut-off frequency of the at least one high-pass filter is lower than a self-resonance frequency of the coupled conductor.

(Configuration 2)

The wireless communication apparatus according to Configuration 1, wherein the at least one high-pass filter includes at least one capacitor.

(Configuration 3)

The wireless communication apparatus according to Configuration 1 or 2, wherein the cut-off frequency of the at least one high-pass filter is a lowest frequency of the differential signal or higher.

(Configuration 4)

The wireless communication apparatus according to any one of Configurations 1 to 3, wherein the circuit element section is connected to at least one ends of the two electrodes.

(Configuration 5)

The wireless communication apparatus according to any one of Configurations 1 to 3, wherein the circuit element section is connected to one end of one of the two electrodes and one end of the other of the two electrodes.

(Configuration 6)

The wireless communication apparatus according to any one of Configurations 1 to 4, wherein the at least one high-pass filter in the circuit element section is connected to at least one end of one of the two electrodes, and the resistor is connected to at least one end of the other of the two electrodes.

(Configuration 7)

The wireless communication apparatus according to any one of Configurations 1 to 6, wherein a resistance value of the resistor is more than or equal to half a value of impedance of the coupled system of the coupled conductor, and less than or equal to two times a value of characteristic impedance of the coupled conductor.

(Configuration 8)

The wireless communication apparatus according to any one of Configurations 1 to 7, wherein the at least one high-pass filter is a Chebyshev filter.

(Configuration 9)

The wireless communication apparatus according to any one of Configurations 1 to 8, wherein a correction circuit is connected to an output section of the receiving circuit.

(Configuration 10)

The wireless communication apparatus according to any one of Configurations 1 to 9, wherein each electrode in the coupled conductor has a rectangular parallelepiped shape.

(Configuration 11)

A wireless communication system comprising:

a transmitting device configured to transmit a differential signal;
a receiving device configured to receive the differential signal through electromagnetic field coupling with the transmitting device,
wherein the receiving device includes:

a coupled conductor including two electrodes configured to receive the differential signal through the electromagnetic field coupling;
a circuit element section that is disposed between the two electrodes and includes at least one high-pass filter and a resistor; and
a receiving circuit that is connected to the coupled conductor, and

wherein a cut-off frequency of the at least one high-pass filter is lower than a self-resonance frequency of the coupled conductor.

(Configuration 12)

The wireless communication system according to Configuration 11,

wherein the transmitting device includes two electrodes, and
wherein the two electrodes are configured to transmit the differential signal.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. A wireless communication apparatus comprising:

   a receiving device (20) for receiving a differential signal through electromagnetic field coupling with another communication apparatus (10), wherein the receiving device (20) includes:

   a coupled conductor (201) including two electrodes (202, 203) for receiving the differential signal through the electromagnetic field coupling;
   a circuit element (204, 205) section that is disposed between the two electrodes (202, 203) and includes at least one high-pass filter (208, 210) and a resistor (209, 211); and
   a receiving circuit (207) that is connected to the coupled conductor (201), and

   wherein a cut-off frequency of the at least one high-pass filter (208, 210) is lower than a self-resonance frequency of the coupled conductor (201).

2. The wireless communication apparatus according to claim 1, wherein the at least one high-pass filter (208, 210) includes at least one capacitor.

3. The wireless communication apparatus according to claim 1, wherein the cut-off frequency of the at least one high-pass filter (208, 210) is a lowest frequency of the differential signal or higher.

4. The wireless communication apparatus according to claim 1, wherein the circuit element section (204, 205) is connected to at least one end of the two electrodes (202, 203).

5. The wireless communication apparatus according to claim 1, wherein the circuit element section (204, 205) is connected to one end of one of the two electrodes (202, 203) and one end of the other of the two electrodes (202, 203).

6. The wireless communication apparatus according to claim 1, wherein the at least one high-pass filter (208, 210) in the circuit element section (204, 205) is connected to at least one end of one of the two electrodes (201, 202), and the resistor (209, 211) is connected to at least one end of the other of the two electrodes (202, 203).

7. The wireless communication apparatus according to claim 1, wherein a resistance value of the resistor (209, 211) is more than or equal to half a value of impedance of the coupled system of the coupled conductor (201), and less than or equal to two times a value of characteristic impedance of the coupled conductor (201).

8. The wireless communication apparatus according to claim 1, wherein the at least one high-pass filter (208, 210, 214, 214) is a Chebyshev filter.

9. The wireless communication apparatus according to claim 1, wherein a correction circuit (219) is connected to an output section of the receiving circuit (207).

10. The wireless communication apparatus according to claim 1, wherein each electrode (202, 203) in the coupled conductor (201) has a rectangular parallelepiped shape.

11. A wireless communication system (100) comprising:

   a transmitting device (10) for transmitting a differential signal;
   a receiving device (20) for receiving the differential signal through electromagnetic field coupling with the transmitting device,
   wherein the receiving device (20) includes:

   a coupled conductor (201) including two electrodes (202, 203) for receiving the differential signal through the electromagnetic field coupling;
   a circuit element section (204, 205) that is disposed between the two electrodes (202, 203) and includes at least one high-pass filter (208, 210) and a resistor (209, 211); and
   a receiving circuit (207) that is connected to the coupled conductor (201), and

   wherein a cut-off frequency of the at least one high-pass filter (208, 210) is lower than a self-resonance frequency of the coupled conductor (201).

12. The wireless communication system according to claim 11,

   wherein the transmitting device (10) includes two second electrodes (102, 103), and
   wherein the two second electrodes (102, 103) are for transmitting the differential signal.

FIG.1A

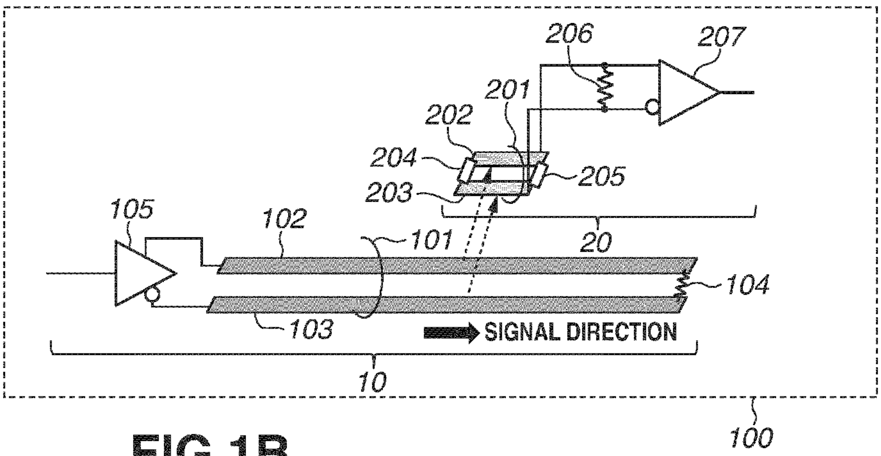


FIG.1B

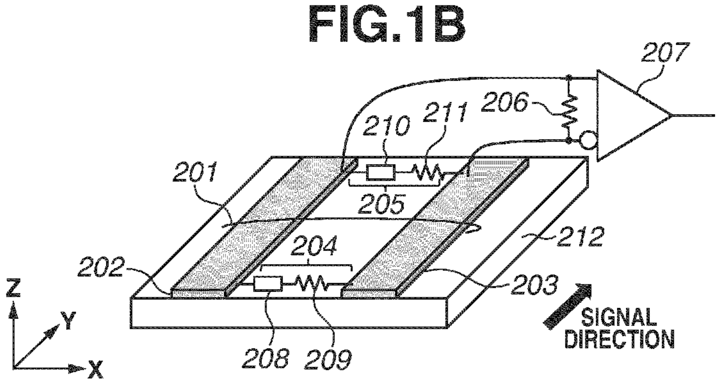


FIG.1C

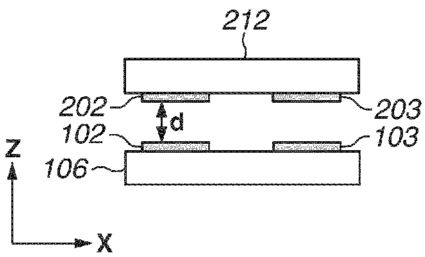

FIG.2A

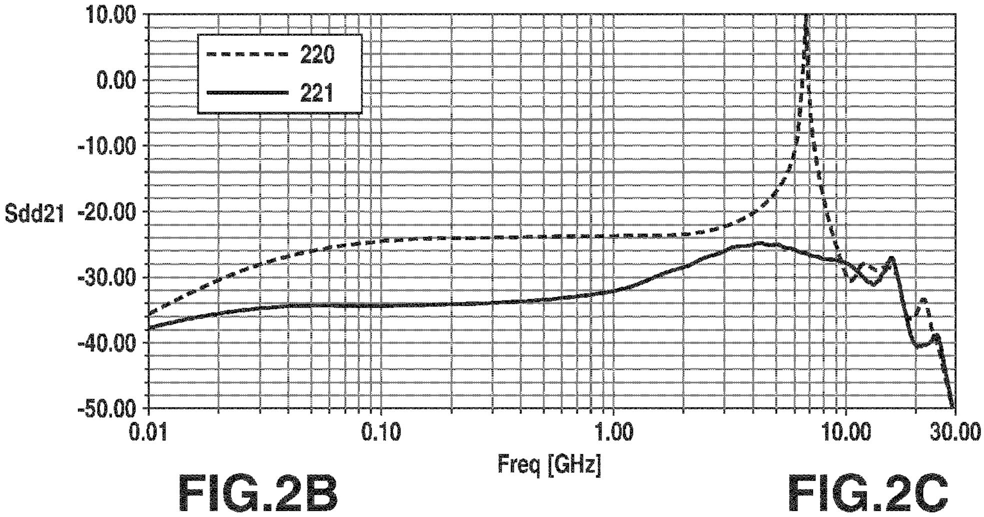


FIG.2B

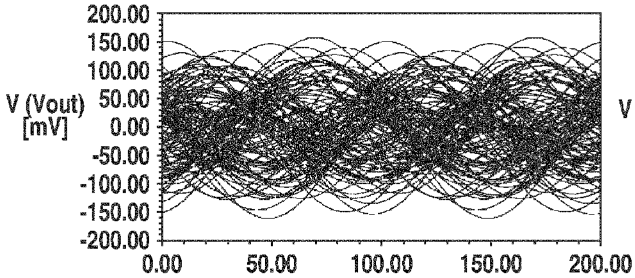


FIG.2C

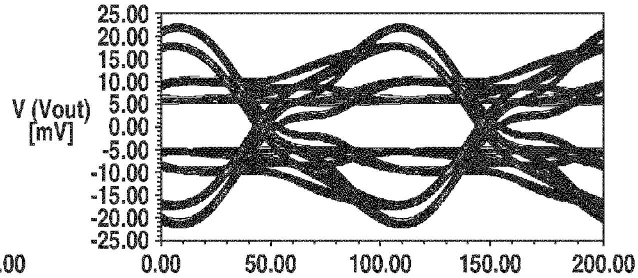

FIG.3A

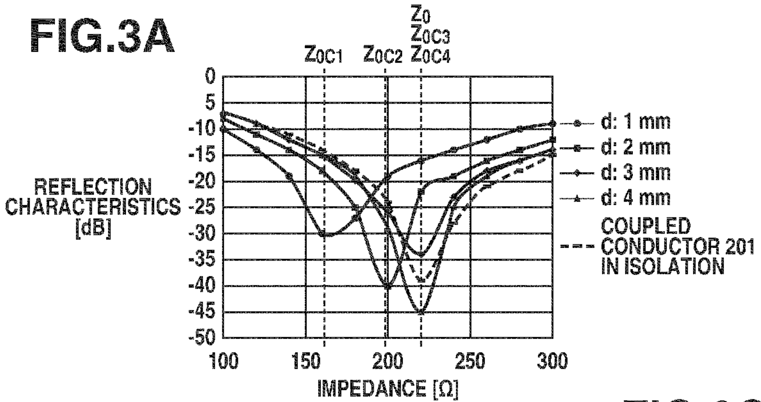


FIG.3B

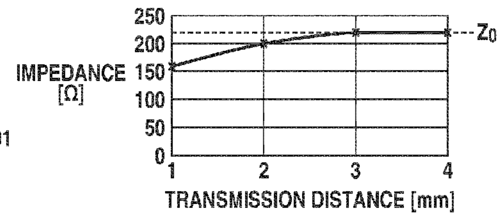


FIG.3C

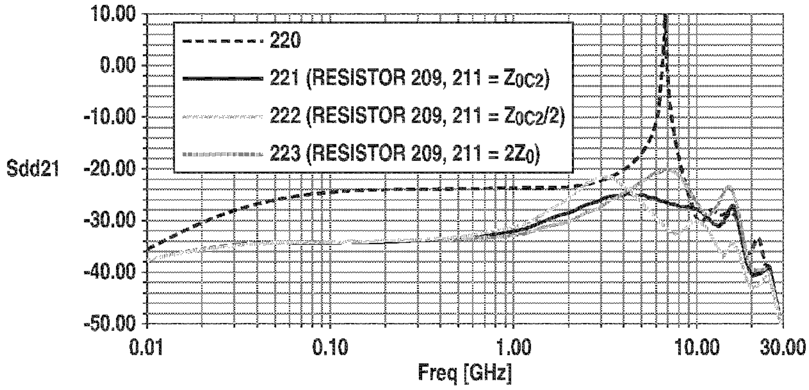

FIG.4A

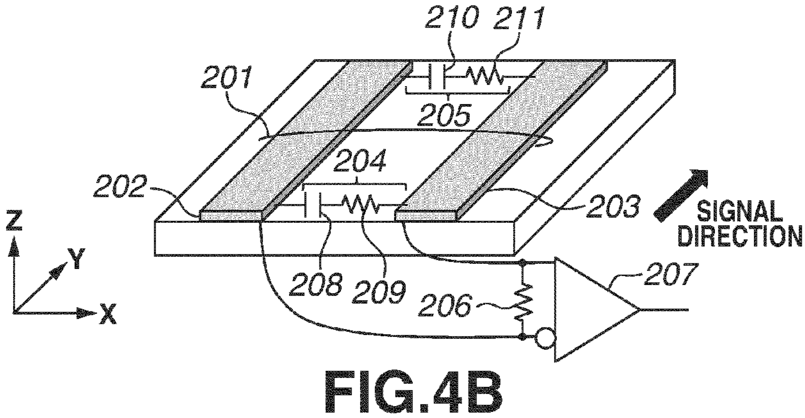

210 211
201
205
204
202
203
SIGNAL DIRECTION
Z
Y
X
208 209
206
207


FIG.4B

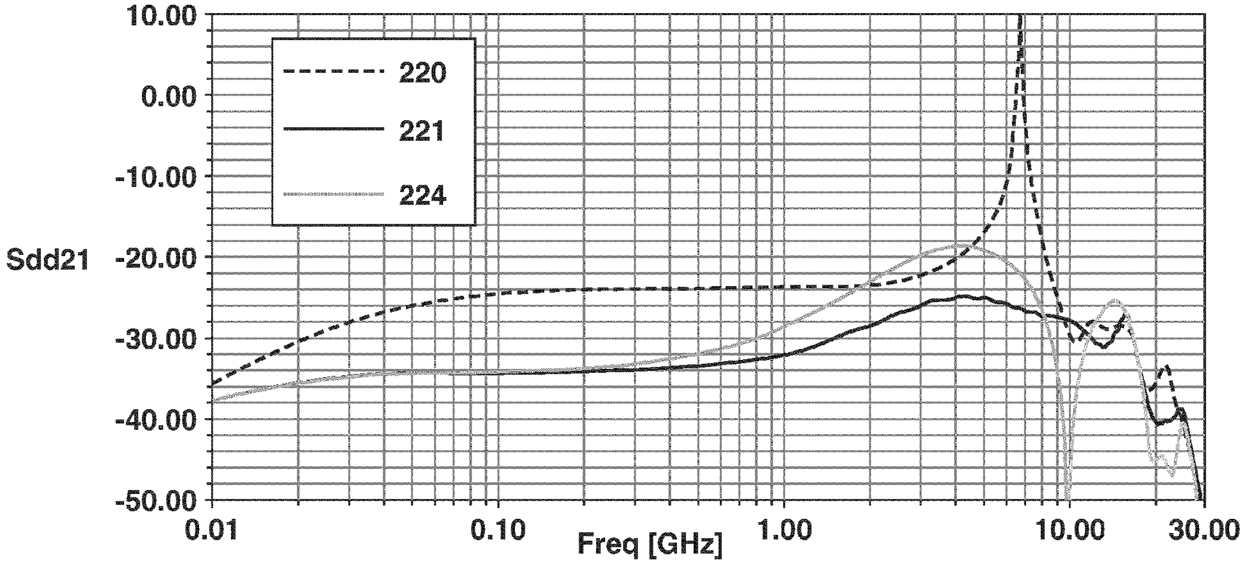

10.00
0.00
-10.00
-20.00
-30.00
-40.00
-50.00
Sdd21
220
221
224
0.01
0.10
1.00
10.00
30.00
Freq [GHz]

FIG.5A

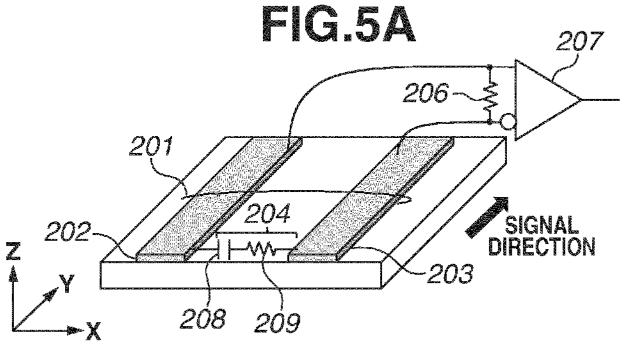


FIG.5B

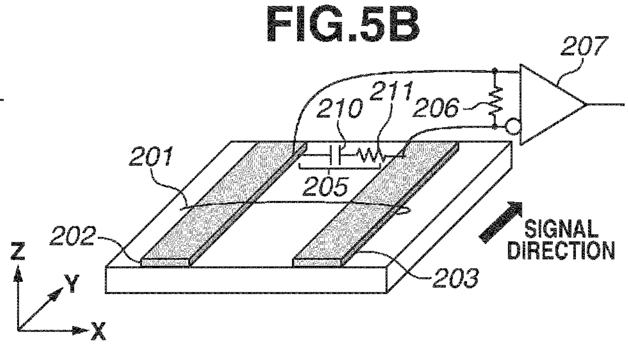


FIG.5C

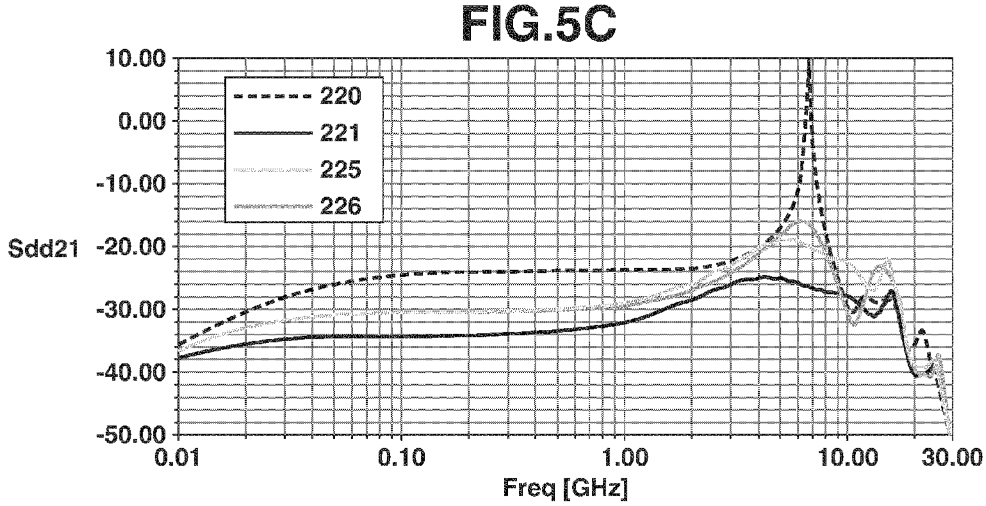

FIG.6A

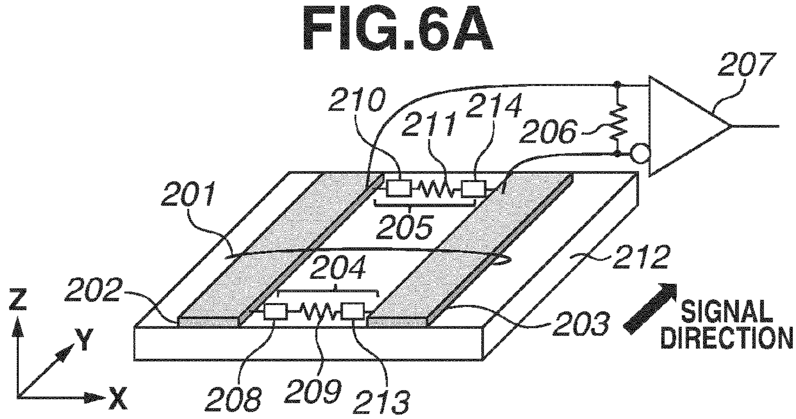


FIG.6B

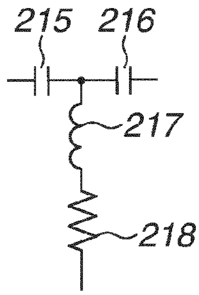


FIG.6C

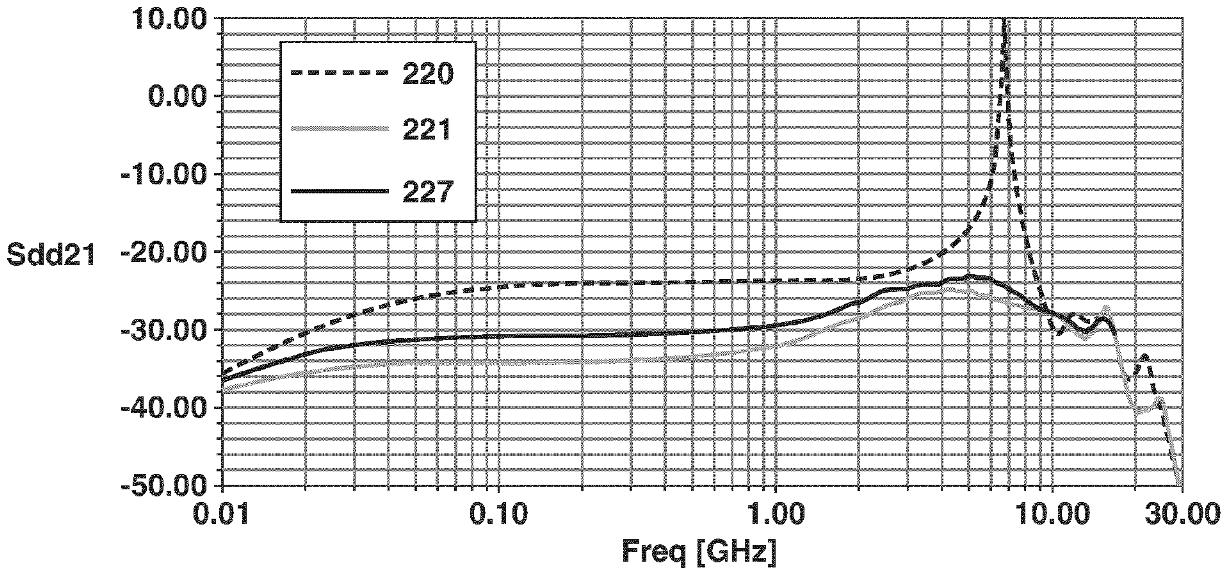

FIG.7A

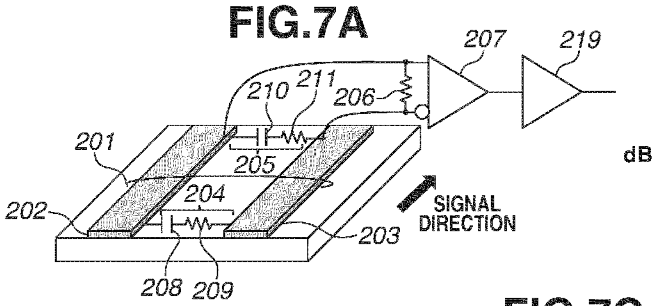


FIG.7B

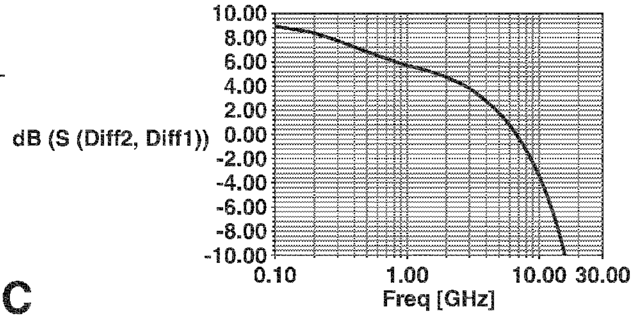


FIG.7C

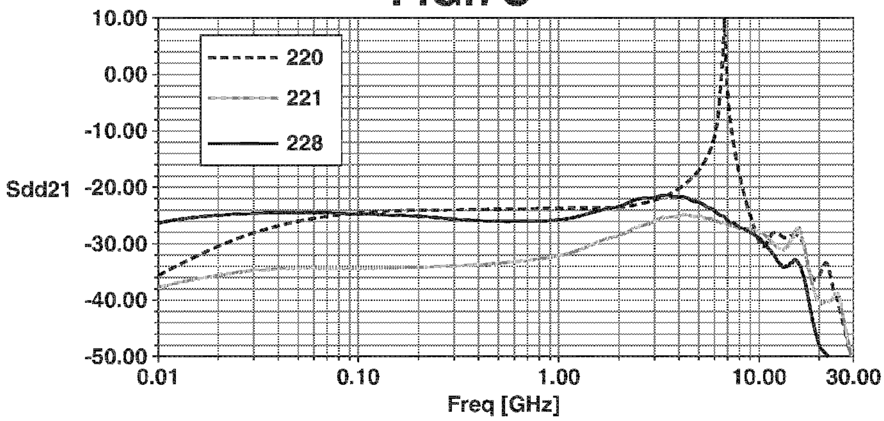

FIG.8A

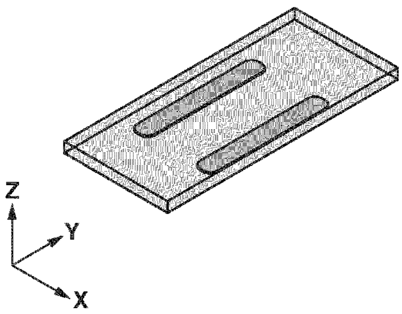


FIG.8B

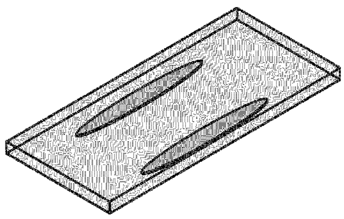

FIG.8C

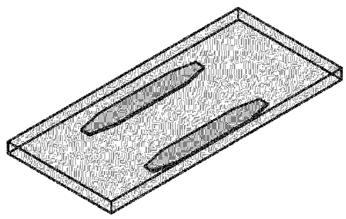

Europäisches Patentamt
European Patent Office
Office européen des brevets

# EUROPEAN SEARCH REPORT

Application Number
EP 25 15 6897

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 228 345 B1 (WANG YIREN [US] ET AL) 18 January 2022 (2022-01-18) | 1-7,9-12 | INV. H04B5/22 H04B1/40 H04B5/40 H04B5/48 |
| Y | * columns 9, 15-21; figures 2, 5, 7 * ----- | 8 | |
| Y | JP 2010 154517 A (FUJIKURA LTD) 8 July 2010 (2010-07-08) * paragraphs [0058] - [0060], [0150] * ----- | 8 | |

TECHNICAL FIELDS SEARCHED (IPC)

H04B

The present search report has been drawn up for all claims

1

| Place of search | Date of completion of the search | Examiner |
|---|---|---|
| Munich | 23 June 2025 | Ganis, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 15 6897

This annex lists the patent family members relating to the patent documents cited in the above-mentioned European search report. The members are as contained in the European Patent Office EDP file on
The European Patent Office is in no way liable for these particulars which are merely given for the purpose of information.

23-06-2025

| Patent document cited in search report | Publication date | Patent family member(s) | Publication date |
|---|---|---|---|
| US 11228345 B1 | 18-01-2022 | NONE | |
| JP 2010154517 A | 08-07-2010 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021168491 A